# EUROPEAN PATENT SPECIFICATION

(11) **EP 1 001 156 B1**
(45) Date of publication and mention of the grant of the patent: **27.10.2004**
(21) Application number: 96942239.3
(22) Date of filing: 19.12.1996
(51) Int. Cl.: F02F 5/00, F16J 9/20, F16J 9/16

(54) **AN OIL SEALING RING**
ÖLDICHTRING
BAGUE ANTIFUITE D'HUILE

(43) Date of publication of application: 17.05.2000
(73) Proprietor: Yu, Xiuming, Handan City, Hebei 057550 (CN)
(72) Inventor: Yu, Xiuming, Handan City, Hebei 057550 (CN)
(74) Representative: Blot, Philippe Robert Emile
(86) International application number: PCT/CN1996/000110
(87) International publication number: WO 1997/022792

(56) References cited:
- CN-U- 85 203 618
- CN-Y- 2 203 362
- DE-C- 3 739 179
- US-A- 2 252 199
- US-A- 5 564 699

## Description

### TECHNICAL FIELD

The present invention relates to an oil sealing ring, especially that used in internal combustion engine piston or compressor piston, which comprises a base ring with a split and an elastic ring provided on the inner circumferential surface of the base ring.

### BACKGROUND OF THE INVENTION

There are several kinds of oil sealing ring which have been used in the piston of reciprocating internal combustion engine, one kind of them is provided with a flange around its outside periphery; the second is the oil ring with grooves, i.e. there are grooves provided in the outside circumferential surface of this kind of oil ring; the third kind is a combination ring made of steel , which consists of two disc rings and one liner spring. All these three kinds of oil ring have the common drawbacks: the rings opening becomes larger as a result of wear between the rings outside circumferential surface and the cylinder wall; loss of oil and gas occurs as the rings moving up and down axially in the ring grooves, this in turn reduces service life of piston ring.

An oil sealing ring is known for example from the document CN-Y-2203362, this ring has staggered splits is a base ring and a disc ring

### CONTENT OF THE INVENTION

It is the object of this invention to provide an oil sealing ring, especially the one used in piston of internal combustion engine or compressor, the ring according to present invention can avoid leakage of oil and gas resulting from the rings opening which becomes larger during the operation and the rings axial movement in the grooves, and then prolong the service life of piston ring.

To achieve the above object, an oil sealing ring provided according to the invention comprises a base ring with a split, and a spring ring disposed on the inner circumferential surface of the base ring, an annular flange extending radially and outwardly is formed on the upper part of the outside circumferential surface of the base ring, and an annular projection extending axially and upwardly is formed on the inside upper surface of the base ring, at least one disc ring is provided around the outside periphery of the projection with the splits of the disc ring and the split of the base ring staggered with each other.

The thickness of the disc ring is equal to the height of the projection, and its external diameter is equal to the external diameter of the flange, said disc ring consists of two pieces.

The angle at which the splits of the disc ring and the splits of the base ring are staggered with each other is in the range of 120°to 180°.

Liner springs are disposed on the bottom of the base ring, the liner spring is an undulated circular reed with its top and bottom surfaces being symmetrical about its center line.

As the disc rings are disposed on the top surface of the base ring of the oil sealing ring provided in the present invention, and the splits of said disc rings are staggered with the split of the base ring, so no axial openings or grooves are formed on the whole annular contacting area between the oil sealing ring and the cylinder wall, thus the reliable sealing is provided. Even though the opening of the base ring becomes larger because of wear, the oil leakage of sealing ring according to the structure of the present invention will not increase.

The contacting area between the oil sealing ring of the present invention and the cylinder wall is smaller than that of the prior art, so the friction is also smaller; as the axial liner springs are provided, the oil sealing ring and the ring groove in the piston ring contacts tightly with each other, thereby not only the axial movements can be eliminated, but also the gas sealing can be obtained, and ring groove wear resulting from the axial movement of the oil sealing ring is reduced; so the oil sealing ring of the present invention can economize fuel oil and lubricating oil, and improve the reliability and endurance of the oil sealing ring.

### BRIEF DESCRIPTION OF THE DRAWINGS

The embodiments will now be described with reference to the accompanying drawings of which:
Figure 1 shows a cross sectional view of an embodiment of the oil sealing ring according to the present invention, in which only a section illustrated, no other parts of the oil sealing ring described in details by way of simplification;
Figure 2 shows a cross sectional view of the oil sealing ring of another embodiment of the present invention;
Figure 3 shows a cross sectional view of the oil sealing ring of an alternative embodiment of the present invention;
Figure 4 shows a cross sectional view of the oil sealing ring of a further embodiment of the present invention;
Figure 5 and 6 shows respectively the cases of adding liner spring to the oil sealing ring of figure 1, and 4 ;
Figure 7 to 11 shows respectively the variable embodiments of figure 1 to 4 in which a spacer ring is provided;
Figure 12 is a top view of the disc ring according to the invention;
Figure 13 is a top view showing an arc sealing segment of the invention.
Figure 14 is a partial sectional view showing one embodiment of the invention;

### DESCRIPTION OF THE EMBODIMENTS

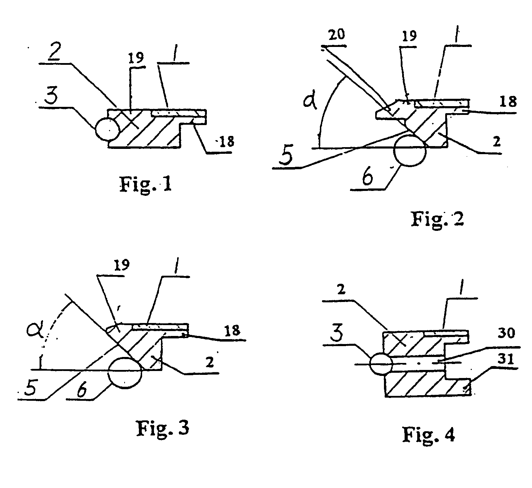

As shown in figure 1, the oil sealing ring of the present invention comprises a base ring 2, which has a concentric annular flange 18 on its outside circumferential surface, and an annular projection 19 on its inside circumferential surface, the projection 19 is concentric with the base ring 2 with its inner surface aligned with the inner surface of base ring 2. The flange 18 and projection 19 is integral with the base ring 2, a disc ring 1 is provided outside the projection 19 with its interior diameter corresponding to the external diameter of the projection 19 and its external diameter corresponding to the external diameter of the flange 18 and its thickness corresponding to the height of the projection 19. The base ring 2 and the disc ring 1 shown in the figure are circular rings with splits, as known in the prior art. According to the present invention the base ring 2 and the disc ring 1 are so arranged that their splits are staggered with an angle between them, the angle may be in the range of 120°to 180°, 180°is perfect(not shown in the figure). This arrangement is carried out in the following other embodiments, so no further description will be given.

A groove is formed in the middle of the inside circumferential surface of the base ring 2 with its section being a hemicycle, and a spring ring 3 is received in the above groove, this is also known in the prior art.

In an alternative embodiment shown in figure 2, the base ring 2 has the same outside circumferential surface as the base ring of the embodiment shown in figure 1, but has a variant inside circumferential surface with a radial flange 20 extending inwardly and formed on its upper part for increasing the integral strength of base ring 2. The flange 20 can be beveled on its top surface as shown in the figure to make it easy to install. A tapered surface 5 is formed on the underside of the inner circumferential surface of base ring 2, an angle α ranged from 45°to 85°lies between the tapered surface 5 and horizontal. The beveled angle can be designed according to the assembling demand. An enhancive ring 6 is provided in contact with said tapered surface 5, the enhancive ring 6 may has the same structure as the above spring ring 3 which can be a spiral spring, however it can be other form, for example, it can be an elastic ring of "V" shape. This kind of the elastic ring can be form by a snakelike spring with its two ends interconnected, said snakelike spring is bent up so that it has a cross section of "V" shape along its longitudinal symmetrical center line. As a result, the elastic ring also has a "V" shape section.

Figure 3 shows a cross sectional view of the oil sealing ring according to a further embodiment of the present invention. The oil sealing ring shown in figure 3 has no inside flange 20 as shown in figure 2, except for this, it has the same structure as that in figure 2.

The base ring 2 shown in figure 4 is a base ring known in the prior art, in which a lubrication passage 30 is provided and a lower flange 31 is disposed oppositely to the flange for receiving disc ring 1. This kind of ring has a symmetrical section relative to the center line of lubrication passage 30, in other words the present invention can be emboded by manufacturing a groove for receiving disc ring 1 on the known piston ring. So the application of the present invention can be used for reforming and maintenance of the avialable equipments without extra cost.

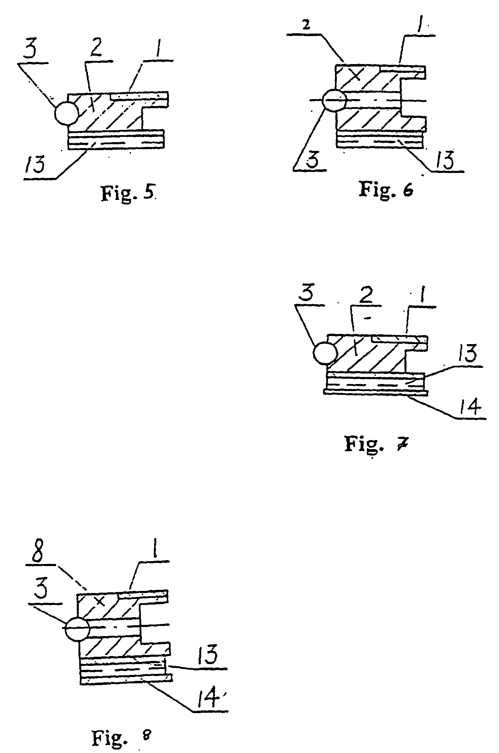

Referring to figures 5 and 6, the cases of adding liner spring 13 to the above embodiments are shown. Said liner spring 13 is an undulated circular reed. The initial tension is obtained between sealing ring and ring groove after initial assembly by disposing the above reed under the base ring, thereby prevent the axial movement of the sealing ring that is likely to occur. The wear between sealing ring and ring groove can be prevented efficiently, thus reduce and weaken the wear engendered in the ring grooves. Liner spring 13 also functions a lubricating oil passage.

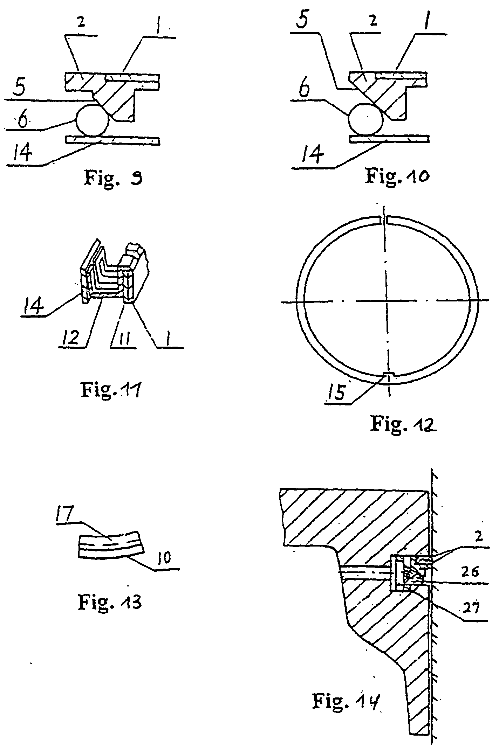

Figures 7 to 11 show the cases of adding spacer ring 14 to the above embodiments. The spacer ring 14 is a circular ring self-evidently, moreover a circular ring with a split, which has a rectangular section. The spacer ring 14 is used to prevent said enhancive ring 6 or liner spring 12,13 from abrading the ring groove directly.

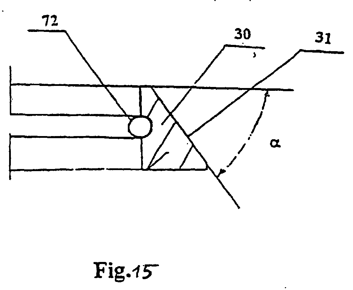

As shown in figure 12, the disc ring 1 of the present invention has a location bulge 15 on its inside circumference, a corresponding recess (not shown) is formed on the projection 19 of the base ring 2, so the stationary locutions of the disc ring 1 and the base ring 2 are provided by cooperating of said bulge 15 and the recess.

The base ring of a further embodiment shown in figure 14 also has an inner tapered surface, however the enhancive ring disposed under the base ring is replaced by a component ring 26. The component ring 26 has a tapered upper surface that cooperates with the inner tapered surface of the base ring 2 and stacks together. Several lubrication passages are through the component ring 26. A radial elastic liner spring 27 is disposed between the component ring 26 and the piston ring groove, the liner spring 27 is formed by a snakelike spring which exerts radial force to the component ring 27, said radial force is divided into a radial component and an axial component with the aid of the tapered surface of the component ring 27 or the base ring 2, thereby the base ring 2 is pushed towards cylinder wall, and any axial movement can be prevented by base ring 2. Said liner spring 27 can be a spring ring 6 mentioned above.

The figure 15 has an alternative spring ring 6 that comprises a tapered ring 30 and an elastic ring 32. The taper of the tapered ring 30 is equal to the taper of the tapered surface of the base ring 2 and coincident with it. Said elastic ring 32 can be a spiral or a snakelike spring. When said elastic ring 32 is a spiral spring , a recess that has a semicircular section is provided on said tapered ring 30 for receiving the spiral spring. The number 31 shown in the drawing indicates the tapered surface of said tapered ring 30.

## Claims

1. An oil sealing ring comprising a base ring (2) with a split, a spring ring (3) disposed on the inner circumferential surface of the base ring (2), wherein an annular flange(18) extending radially and outwardly is formed on the upper part of the outside circumferential surface of the base ring(2), and an annular projection (19) extending axially and upwardly is formed on the inside upper surface of the base ring (2), at least one disc ring (1) is provided around the outside periphery of the projection( 19) with the splits of the disc ring (1) and the split of the base ring(2) staggered with each other.

2. An oil sealing ring as in claim 1, wherein the thickness of the disc ring (1) is equal to the height of the projection (19), and its external diameter is equal to the external diameter of the flange(18), said disc ring (1) consists of two pieces.

3. An oil sealing ring as in claim 1, wherein the angle at which the splits of the disc ring and the splits of the base ring are staggered with each other is in the range of 120°to 180°.

4. An oil sealing ring as in one of claims 1 to 3, wherein another annular flange (31) extending radially and outwardly is formed on the lower part of the outside circumferential surface of the base ring (2), and the base ring (2) is provided with at least one lubrication passage (30).

5. An oil sealing ring as in claim 1, 2 or 3, wherein liner springs (13) are disposed on the bottom of the base ring (2), the liner spring (13) is an undulated circular reed with its top and bottom surfaces being symmetrical about its center line.

## Patentansprüche

1. Öldichtring mit einem Basisring (2) mit einem Schlitz, einem an der inneren Umfangsfläche des Basisrings (2) angeordneten Federring (3), wobei ein sich radial und auswärts erstreckender ringförmiger Flansch (18) an dem Oberteil der äußeren Umfangsfläche des Basisringes (2) ausgebildet ist, und wobei ein sich axial und nach oben erstreckender ringförmiger Vorsprung (19) an der inneren oberen Fläche des Basisringes (2) ausgebildet ist, wobei wenigstens ein Scheibenring (1) um den Außenrand des Vorsprunges (19) herum ausgebildet ist, wobei die Schlitze des Scheibenringes (1) und der Schlitz des Basis-Ringes (2) versetzt zueinander angeordnet sind.

2. Öldichtring gemäß Anspruch 1, wobei die Dicke des Scheibenringes (1) gleich ist zu der Höhe des Vorsprunges (19), und wobei sein Außen-Durchmesser gleich ist zu dem Außen-Durchmesser des Flansches (18), wobei der Scheibenring (1) aus zwei Teilen besteht.

3. Öldichtring gemäß Anspruch 1, wobei der Winkel, unter welchem die Schlitze des Scheibenringes und die Schlitze des Basisringes versetzt sind, in dem Bereich von 120° bis 180° liegt.

4. Öldichtring gemäß einem der Ansprüche 1 bis 3, wobei ein weiterer sich radial und auswärts erstreckender ringförmiger Flansch (31) an dem Unterteil der äußeren Umfangsfläche des Basisringes (2) ausgebildet ist, und wobei der Basisring (2) mit wenigstens einem Schmier-Durchgang (30) versehen ist.

5. Öldichtring gemäß einem der Ansprüche 1, 2 oder 3, wobei lineare Federn (13) am Boden des Basisringes (2) angeordnet sind, wobei die lineare Feder (13) ein gewelltes kreisförmiges Blatt ist, dessen obere und untere Fläche bezüglich seiner Mittellinie symmetrisch ist.

## Revendications

1. Bague antifuite d'huile comprenant un anneau de base (2) avec une fente, un anneau élastique (3) disposé sur la surface interne circonférentielle de l'anneau de base (2), dans laquelle une bride annulaire (18) s'étendant radialement et vers l'extérieur est formée sur la partie supérieure de la surface externe circonférentielle de l'anneau de base (2), et une projection annulaire (19) s'étendant axialement et vers le haut est formée sur la surface interne supérieure de l'anneau de base (2), au moins un anneau plat (1) est fourni autour de la périphérie extérieure de la projection (19) avec les fentes de l'anneau plat (1) et la fente de l'anneau de base (2) décalées les unes par rapport aux autres.

2. Bague antifuite d'huile selon la revendication 1, dans laquelle l'épaisseur de l'anneau plat (1) est égale à la haùteur de la projection (19) et son diamètre extérieur est égal au diamètre extérieur de la bride (18), ledit anneau plat (1) consistant en deux pièces.

3. Bague antifuite d'huile selon la revendication 1, dans laquelle l'angle auquel les échancrures de l'anneau plat et les échancrures de l'anneau de base sont décalées les unes par rapport aux autres, se situe entre 120° et 180°.

4. Bague antifuite d'huile selon l'une des revendications 1 à 3, dans laquelle une autre bride annulaire (31) s'étendant radialement et vers l'extérieur est formée sur la partie inférieure de la surface circonférentielle externe de l'anneau de base (2), et l'anneau de base (2) est muni au moins d'un passage de graissage (30).

5. Bague antifuite d'huile selon l'une des revendications 1, 2 ou 3, dans laquelle des ressorts à douille (13) sont disposés au fond de l'anneau de base (2), le ressort à douille (13) est une cavité circulaire ondulée avec ses surfaces supérieure et inférieure étant symétriques autour de son axe.
